# EUROPÄISCHE PATENTANMELDUNG

(11) **EP 1 970 261 A2**
(43) Veröffentlichungstag der Anmeldung: **17.09.2008**
(21) Anmeldenummer: 08003610.6
(22) Anmeldetag: 28.02.2008
(51) Int. Cl.: B60R 19/56

(54) **Unterfahrschutzanordnung für Nutzfahrzeuge**

(30) Priorität: 13.03.2007 DE 202007003715 U
(71) Anmelder: Schmitz Gotha Fahrzeugwerke GmbH, 99867 Gotha (DE)
(72) Erfinder:
(74) Vertreter: Weber, Gerhard

(57) **Zusammenfassung**

Für eine Unterfahrschutzanordnung für ein Nutzfahrzeug, welche einen schwenkbaren Unterfahrschutz mit zwei seitlich beabstandeten Schwenkarmen und einen Stoßbalken enthält, wird vorgeschlagen, dass zwischen einen Aktuator und wenigstens einen Schwenkarm ein flexibles Zugelement eingefügt ist, welches eine von dem Aktuator aufgebrachte Kraft auf den wenigstens einen Schwenkarm überträgt.

## Beschreibung

Die Erfindung betrifft eine Unterfahrschutzanordnung für Nutzfahrzeuge.

Unterfahrschutzanordnungen für Nutzfahrzeuge weisen in Straßenfahrposition einen geringen vertikalen Abstand zur Fahrbahn auf, welcher z. B. bei Geländefahrt oder insbesondere bei Kippmuldenfahrzeugen an Straßenfertigern ungünstig ist. Es ist daher bekannt, bei solchen Unterfahrschutzanordnungen eine bei Straßenfahrten den vorgeschriebenen geringen Abstand zur Fahrbahn einnehmende Stoßstange über seitlich beabstandete Schwenkarme in Schwenkgelenken um eine senkrecht zur Fahrtrichtung verlaufende Schwenkachse nach oben verschwenkbar zu lagern.

Aus der DE 37 22 312 C2 ist ein Kippfahrzeug mit einem Unterfahrschutz bekannt, bei welchem ein Schutzbalken an zwei Schwenkarmen vertikal verschwenkbar gelagert ist. Der Unterfahrschutz ist sowohl in einer unteren Stellung als Straßenverkehrslage als auch in einer oberen Stellung als Geländeverkehrslage verriegelbar. Bei Verriegelung in der oberen Stellung ist der Unterfahrschutz beim Kippen der Kippmulde entgegen einer Federkaft nach unten verschiebbar.

In der DE 42 01 388 A1 ist ein Unterfahrschutz für Nutzfahrzeuge beschrieben, bei welchem eine Stoßstange an einer Parallelogramm-Hebelanordnung angelenkt und vertikal verlagerbar. Die Verlagerung kann manuell erfolgen, wofür eine Gewichtsausgleichsfeder vorgesehen ist, oder mittels eines elektrischen oder hydraulischen Antriebs.

In der DE 203 02 118 U1 ist ein elektro-pneumatisch klappbarer Unterfahrschutz beschrieben, welcher mittels eines über elektrisch steuerbare Ventile betätigbaren Pneumatikzylinders zwischen einer oberen und einer unteren Endstellung verlagert und in beiden Endstellungen verriegelt werden kann. Zwischen Pneumatikzylinder und Schwenkarm des Unterfahrschutzes kann ein speziell geformter Hubarm als kraftübertragendes Element eingefügt sein.

Der Erfindung liegt die Aufgabe zugrunde, eine vorteilhafte Unterfahrschutzanordnung mit einem verschwenkbaren Unterfahrschutz anzugeben.

Die Erfindung ist im Anspruch 1 beschrieben. Die abhängigen Ansprüche enthalten vorteilhafte Ausgestaltungen und Weiterbildungen der Erfindung.

Die Übertragung der von dem Aktuator aufgebrachten Betätigungskraft auf einen Schwenkarm über ein flexibles erstes Zugelement ermöglicht auf einfache und kostengünstige Weise einen vorteilhaften Aufbau der Unterfahrschutzanordnung. Insbesondere kann der Aktuator an einer von dem Schwenkarm beabstandeten Position am Fahrzeug angeordnet werden. Diese Position kann insbesondere so gewählt sein, dass der Aktuator an dieser Position nicht andere Fahrzeugfunktionen behindert und selbst gegen Beschädigung geschützt ist. Das flexible Zugelement ist vorzugsweise ein Stahlseil. Das Zugelement kann zwischen Schwenkarm und Aktuator eine oder mehrere Richtungsumlenkungen durchlaufen.

In besonders vorteilhafter Ausführung ist vorgesehen, dass das flexible erste Zugelement in der unteren Endstellung des Schwenkarms dessen Schwenkachse von dieser radial beabstandet auf einer Kurvenbahn umschlingt und beim Aufschwenken des Schwenkarms von der Kurvenbahn abgewickelt wird. In vorteilhafter Weiterbildung kann vorgesehen sein, dass die Kurvenbahn unrund bezüglich der Schwenkachse ist. Insbesondere kann bei unrundem Verlauf der Kurvenbahn vorteilhafterweise das über das Zugelement auf den Schwenkarm ausgeübte Drehmoment auch bei gleichbleibender Aktuatorkraft an unterschiedliche Erfordernisse in einzelnen Abschnitten der Bewegung des Unterfahrschutzes beim Aufschwenken des Unterfahrschutzes auf einfache Weise angepasst werden.

Durch den Einsatz des flexiblen Zugelements ist vorteilhafterweise auch bei großem Schwenkbereich des Unterfahrschutzes zwischen dessen beiden Endstellungen ein pneumatischer Aktuator einsetzbar. Der Schwenkbereich des Unterfahrschutzes um die Schwenkachse zwischen den beiden Endstellungen umfasst vorteilhafterweise wenigstens 120°, insbesondere wenigstens 150°. Insbesondere durch den die Schwenkachse auf der Kurvenbahn umschlingenden Verlauf des flexiblen ersten Zugelements kann die Variation der vom Aktuator aufzubringenden Betätigungskraft bei der aufschwenkenden Bewegung des Unterfahrschutzes gering gehalten werden, was vorteilhaft für die Dimensionierung des pneumatischen Aktuators ist. Ein pneumatischer Aktuator ist gegenüber einem hydraulischen Aktuator typischerweise kostengünstiger und kann vorteilhafterweise aus dem auch für Federung und Bremsanordnung von Nutzfahrzeugen bereits vorhandenen Druckluftsystem gespeist werden.

Bei der aufschwenkenden Bewegung des Unterfahrschutzes aus der unteren Endstellung in die obere Endstellung überträgt das flexible Zugelement die Betätigungskraft des Aktuators auf den wenigstens einen Schwenkarm zur Überwindung der Gewichtskraft und gegebenenfalls einer zusätzlichen Rückstellkraft. Der Schwerpunkt des verschwenkbaren Unterfahrschutzes durchläuft bei der Bewegung von der unteren Endstellung in die obere Endstellung vorteilhafterweise einen oberen Scheitelpunkt über der Schwenkachse, so dass in der oberen Endstellung das Gewicht des Unterfahrschutzes diesen in die obere Endstellung drückt. Durch die Verschwenkung des Unterfahrschutzes über den oberen Scheitelpunkt hinweg, wobei sich die Schwenkbewegung nach dem Scheitelpunkt in Fahrtrichtung des Fahrzeugs nach vorne fortsetzt, führt zu einer besonders vorteilhaften Anordnung des Unterfahrschutzes in der oberen Endstellung, insbesondere bei der bevorzugten Ausführung des Fahrzeugs als ein Kipperfahrzeug mit einem heckseitigen Kipplager für einen kippbaren Aufbau. Solche Kipperfahrzeuge mit dem Erfordernis eines aufschwenkbaren Unterfahrschutzes sind insbesondere zur Übergabe von Straßenbelagmaterial an sogenannte Straßenfertiger im Einsatz.

Insbesondere bei einer nach einem oberen Scheitelpunkt liegenden oberen Endstellung der Aufschwenkbewegung wird für die Rückschwenkung des Unterfahrschutzes aus der oberen Endstellung in Richtung der unteren Endstellung zumindest anfänglich bis zur Überwindung des oberen Scheitelpunkts eine rückschwenkend auf dem Unterfahrschutz wirkende Kraft erforderlich. Diese kann in erster vorteilhafter Ausführung die Verwendung eines doppelt wirkenden, d. h. in entgegen gesetzte Richtung betätigbaren Aktuator, oder vorzugsweise durch einen zweiten Aktuator aufgebracht sein. Die Verwendung eines zweiten Aktuators oder eines doppelt wirkenden Aktuators mit jeweils zugeordneten Steuereinrichtungen und Ventilen ermöglicht auf besonders vorteilhafte Weise die Steuerung der verschiedenen, bei der Verlagerung des Unterfahrschutzes und in dessen Endstellungen aufzubringenden Kräfte.

In bevorzugter Ausführungsform ist eine solche den Unterfahrschutz aus der oberen Endstellung rückschwenkende Kraft durch eine Federanordnung aufgebracht, wobei vorteilhafterweise wenigstens eine Feder der Federanordnung bei der Schwenkbewegung des Unterfahrschutzes in die obere Endstellung gespannt wird und die Federkraft der gespannten Feder zumindest einen Teil, vorzugsweise die gesamte Kraft zur Rückschwenkung des Unterfahrschutzes über den oberen Scheitelpunkt hinaus erbringt. Der Unterfahrschutz ist dann in der oberen Endstellung durch anhaltende Betätigung des Aktuators, d. h. z. B. anhaltende Beaufschlagung eines Pneumatikzylinders mit Druckkraft und/oder über eine lösbare Verriegelung gehalten.

Eine solche Federanordnung kann z. B. in vorteilhafter einfacher Ausführung eine bei wenigstens einem der Schwenkgelenke angeordnete Schwenkfeder und/oder einen Körper aus elastisch verformbarem Material, z. B. einem Elastomer enthalten. In bevorzugter Ausführung enthält die Federanordnung eine gewendelte Feder, welche vorteilhafterweise eine Zugfeder ist. In besonders vorteilhafter Ausführung ist die Feder mit wenigstens einem der beiden Schwenkarme über ein zweites Zugelement verbunden. Das zweite Zugelement kann vorteilhafterweise in der oberen Endstellung die Schwenkachse von dieser beabstandet auf einer zweiten Kurvenbahn umschlingen und zumindest im anfänglichen Abschnitt der abschwenkenden Bewegung aus der oberen Endstellung heraus von der zweiten Kurvenbahn abwickelbar sein. Das zweite Zugelement kann vorteilhafterweise in einem Verlauf von dem Schwenkarm zu der Feder wenigstens eine Umlenkung durchlaufen und die Feder kann dadurch günstigerweise an geschützter und/oder andere Fahrzeugfunktionen nicht behindernder Position angeordnet sein.

Vorzugsweise ist das erste Zugelement mit einem ersten und das zweite Zugelement mit einem zweiten von zwei seitlich beabstandeten Schwenkarmen des Unterfahrschutzes verbunden, so dass eine durch den Aktuator aufgebrachte aufschwenkende Kraft über den ersten Schwenkarm und eine zumindest anfänglich rückschwenkende Kraft auf den zweiten Schwenkarm wirkt. Der schwenkbare Unterfahrschutz ist in sich so starr, dass eine jeweils einseitig wirkende Kraft bzw. zwei an den beiden Schwenkarmen entgegen gesetzte Drehmoment bewirkende Kräfte nicht zu einer Verwindung des Unterfahrschutzes führen sondern dieser in sich formstabil um die Schwenkachse verschwenkt wird.

In anderer Ausführung können auch für die aufschwenkende und/oder die abschwenkende Bewegung des Unterfahrschutzes die jeweiligen Kräfte an beiden Schwenkarmen gleichzeitig angreifen.

Bei der abschwenkenden Bewegung des Unterfahrschutzes in Richtung der unteren Endstellung kann vorteilhafterweise über das erste Zugelement durch den Aktuator eine die Bewegung bremsende Kraft aufgebracht werden, wofür die Betätigungskraft des Aktuators der Aktuator nicht abrupt abgebrochen wird, sondern verlangsamend auf die abschwenkende Bewegung einwirkt. Eine solche Dämpfung oder Bremsung der abschwenkenden Bewegung kann in vorteilhafter Ausführung in der Weise erfolgen, dass in einem als Aktuator eingesetzten Druckfluidzylinder, insbesondere einem Pneumatikzylinder das Druckfluid nur langsam aus der Zylinderkammer entweichen kann, z. B. über eine gegebenenfalls im Querschnitt einstellbare Drosselöffnung.

In vorteilhafter Ausführung kann der Unterfahrschutz in der unteren Endstellung durch eine Haltekraft, welche zusätzlich zu der Gewichtskraft des Unterfahrschutzes wirkt und durch die Betätigungskraft des Aktuators überwindbar ist, in die Endstellung gezogen sein. Vorzugsweise ist die Haltekraft durch die Federanordnung als Federkraft aufgebracht und insbesondere über das zweite Zugelement durch dieselbe Feder wie die rückschwenkende Rückstellkraft aufgebracht. Die Feder kann kürzer in der unteren Endstellung des Unterfahrschutzes vorgespannt sein und bei der aufschwenkenden Bewegung des Unterfahrschutzes weiter gespannt werden.

Die Schwenkarme sind vorteilhafterweise an von den Längsträgern eines Chassis des Fahrzeugs an dessen Heck schräg nach hinten unten weg führenden Streben angelenkt. Das erste und/oder das zweite Zugelement verlaufen vorteilhafterweise von den Schwenkarmen in Richtung des Aktuators bzw. der Feder der Federanordnung in einem ersten Abschnitt entlang dieser Streben und vorteilhafterweise zumindest überwiegend, vorzugsweise vollständig innerhalb der seitlichen Projektion der Streben.

Die Erfindung ist nachfolgend anhand eines bevorzugten Ausführungsbeispiels unter Bezugnahme auf die Abbildungen noch eingehend veranschaulicht. Dabei zeigt:
- Fig. 1: eine Schrägansicht von hinten,
- Fig. 2: eine Schrägansicht von vorn,
- Fig. 3: eine Draufsicht zu der unteren Endstellung des Unterfahrschutzes,
- Fig. 4: eine Seitenansicht von links,
- Fig. 5: die Seitenansicht von rechts,
- Fig. 6: einen vergrößerten Ausschnitt eines Schwenkgelenks.

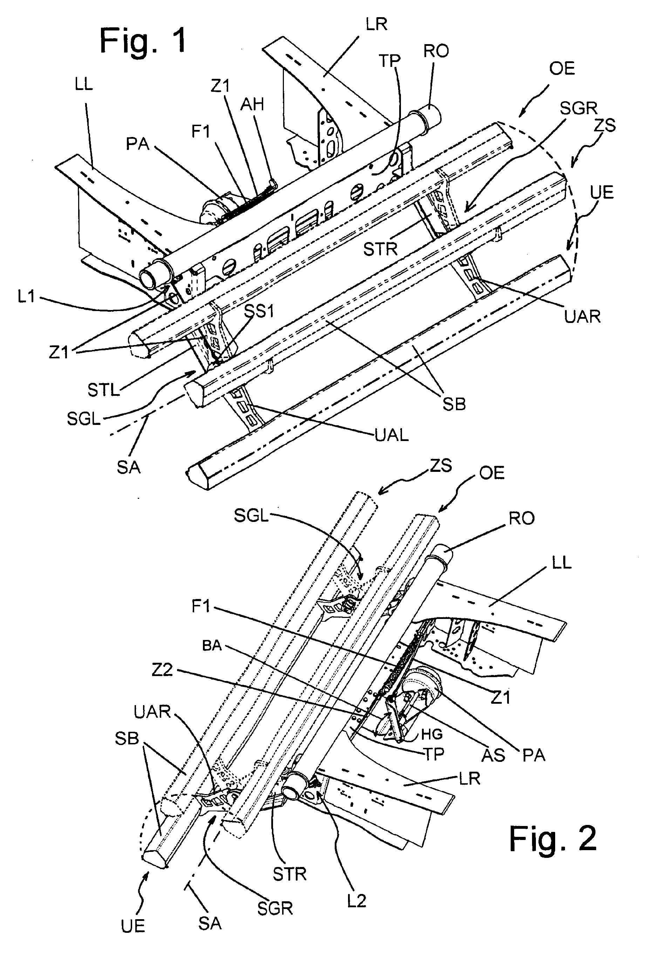

Fig. 1 zeigt in einer Ansicht von schräg hinten eine erfindungsgemäße Unterfahrschutzanordnung mit heckseitigen Endabschnitten von Längsträgern LL, LR eines Fahrzeugchassis. Die Enden der Längsträger sind einerseits durch einen Rohrkörper RO als Träger für das Kipplager einer der Übersicht halber nicht mit eingezeichneten Kippmulde und zum anderen durch eine Trägerplatte TP überbrückt. Von den Enden der Längsträgerabschnitte LL, LR ragen schräg nach hinten unten feststehende Streben STL, STR ab, welche zu zwei Schwenkgelenken SGL, SGR mit einer gemeinsamen horizontalen, quer zur Hauptfahrrichtung des Fahrzeugs verlaufenden Schwenkachse SA führen. In den Schwenkgelenken ist ein Unterfahrschutz mit zwei Schwenkarmen UAL, UAR und einem diese überbrückenden Stoßbalken SB um die Schwenkachse SA verschwenkbar angelenkt. Die Verschwenkung erfolgt zwischen einer mit durchgezogenen Linie eingezeichneten unteren Endstellung UE, in welcher der Unterfahrschutz vorzugsweise an einem mechanischen Anschlag der Streben STL, STR abgestützt ist, und einer mit unterbrochener Linie eingezeichneten oberen Endstellung OE, in welcher der Stoßbalken SB in die Nähe der Trägerplatte TP verschwenkt ist, über einen Schwenkwinkel WS von ca. 150°. In der oberen Endstellung ist unterhalb der Streben STL, STR der Raum freigegeben zur Anlage einer Schiebevorrichtung eines Straßenfertigers an den Rädern des Fahrzeugs. Zugleich ist der Stoßbalken in der oberen Endstellung unterhalb des beim Kippen der Kippmulde nach unten geschwenkten hinteren Endes der Kippmulde angeordnet und behindert die Kippbewegung der Kippmulde nicht. Eine bei der Verschwenkung durchfahrene Zwischenstellung ist gleichfalls mit unterbrochener Linie eingezeichnet und mit ZS bezeichnet.

Vorteilhafterweise weisen die Schwenkarme UAL, UAR in der unteren Endstellung des Unterfahrschutzes von den Schwenkgelenken SGL, SGR schräg nach hinten unten und in der oberen Endstellung des Unterfahrschutzes schräg nach vorne oben. Der Schwenkwinkel um die Schwenkachse zwischen der unteren und der oberen Endstellung beträgt vorteilhafterweise mehr als 120°, vorzugsweise mehr als 150°.

In dem skizzierten Beispiel ist in dem linken Schwenkgelenk SGL eine erste Seilscheibe SS1 drehfest mit dem Schwenkarm UAL des Unterfahrschutzes verbunden. Der Unterfahrschutz mit Schwenkarmen UAL, UAR und Stoßbalken SB ist in sich starr, so dass die Schwenkarme UAL, UAR sich immer synchron und gleichförmig um die Schwenkachse SA bewegen.

Ein erstes Zugelement Z1, insbesondere ein Stahlseil, umschlingt in dem linken Schwenkgelenk SGL auf einer durch die Seilscheibe SS1 gebildeten Kurvenbahn die Schwenkachse SA in der unteren Endstellung des Unterfahrschutzes zumindest teilweise und ist bei einer Schwenkbewegung des Unterfahrschutzes aus der unteren Endstellung in Richtung der oberen Endstellung von der Kurvenbahn der Seilscheibe abwickelbar. Die Seilscheibe ist drehfest mit dem Schwenkarm UAL verbunden. Das Zugelement Z1 ist am Ende der Kurvenbahn fest mit der Seilscheibe verbunden, beispielsweise eingehängt oder eingeklemmt.

Das Zugelement Z1 führt von der Seilscheibe SS1 entlang der Strebe STL in Richtung einer am hinteren Ende des Längsträgerabschnitts LL vorgesehenen Umlenkung L1, insbesondere mit wenigstens einer Umlenkrolle, und wird dort quer zur Fahrtrichtung in einen in Fahrtrichtung vor der Trägerplatte TP liegenden Bereich umgelenkt, in welchem ein Aktuator PA angeordnet ist. Der Aktuator PA ist vorzugsweise als ein Pneumatikzylinder ausgeführt und aus einer auch für andere Funktionen des Fahrzeugs vorhandenen Druckluftanlage mit Druckluft versorgt.

Bei dem auf der rechten Seite befindlichen zweiten Schwenkgelenk SGR ist eine zweite Seilscheibe SS2 mit dem Schwenkarm UAR des Unterfahrschutzes drehfest gekoppelt und mit diesem um die Schwenkachse SA verschwenkbar. Ein durch die Strebe STR in Fig. 1 weitgehend verdecktes zweites Zugelement Z2 ist mit der Seilscheibe SS2 verbunden und bei einer aufschwenkenden Bewegung des Unterfahrschutzes aus der unteren Endstellung in die obere Endstellung auf eine Kurvenbahn der Seilscheibe SS2 unter Umschlingung der Schwenkachse SA aufwickelbar. Das zweite Zugelement Z2, welches vorzugsweise wiederum als Stahlseil ausgeführt ist, führt in zum Zugseil Z1 ähnlicher Weise zu einer in Fig. 1 verdeckten zweiten Umlenkung L2 im hinteren Bereich des Längsträgerabschnitts LR und wird dort quer zur Fahrtrichtung in den in Fahrtrichtung vor der Trägerplatte TP liegenden Bereich umgelenkt.

In Fig. 2 ist in einer Ansicht von schräg vorne der in Fahrtrichtung vor der Trägerplatte TP liegende Bereich einsehbar. Ein Pneumatikzylinder als Aktuator PA ist direkt oder über eine weitere Halteplatte mit der Trägerplatte TP in stabiler Position verbunden. Eine Stempelstange AS des Aktuators PA wirkt auf einen Schwenkhebel AH, welcher in einem Hebelgelenk HG an bezüglich der Trägerplatte TP fester Position schwenkbar angelenkt ist. Ein dem Hebelgelenk HG abgewandtes Ende des Schwenkhebels AH ist mit einem Ende des Zugseils Z1 verbunden. Das Zugseil Z1 verläuft von dem Ende des Schwenkhebels AH in Richtung der ersten Umlenkung L1 im wesentlichen quer zur Fahrtrichtung. Bei Beaufschlagung des Aktuators PA mit Druckluft wird dessen Stempelstange AS in Richtung des Schwenkhebels AH gedrückt und schwenkt diesen Schwenkhebel um dessen Hebelgelenk HG, was durch einen Pfeil angedeutet ist. Dabei wird eine Betätigungskraft auf das Zugseil Z1 ausgeübt, welche über die Kurvenbahn der Seilscheibe SS1 ein Drehmoment auf den Schwenkarm UAL des Unterfahrschutzes und damit insgesamt auf den als in sich starr zu betrachtenden Unterfahrschutz ausübt. Dieses Drehmoment bewirkt eine Verschwenkung des Unterfahrschutzes aus der unteren Endstellung in Richtung der oberen Endstellung.

Das zweite Zugelement Z2 ist in dem in Fahrtrichtung vor der Trägerplatte TP liegenden Bereich mit einer gewendelten Zugfeder F1 verbunden, deren dem Zugelement Z2 abgewandtes Ende an der Trägerplatte TP oder dem Längsträgerabschnitt LL direkt oder indirekt aufgehängt ist.

Die Feder F1 ist in der unteren Endstellung des Unterfahrschutzes vorteilhafterweise vorgespannt, so dass das Zugelement Z2, welches über die zweite Umlenkung L2 zu der zweiten Seilscheibe SS2 im zweiten Schwenkgelenk SGR geführt ist, auf den Unterfahrschutz ein Drehmoment ausübt, welches den Unterfahrschutz zusätzlich zu der eigenen Gewichtskraft in die Endstellung zieht und in dieser hält. Zur Einstellung der Federspannung kann vorteilhafterweise ein Spannschloss SS vorgesehen sein.

Eine von dem Aktuator PA bei dessen Betätigung erzeugte Betätigungskraft auf das Zugseil F1 überwindet die Gesamtkraft aus Gewichtskraft des Unterfahrschutzes und Zugkraft im zweiten Zugelement Z2 aus der Feder-Vorspannung und schwenkt den Unterfahrschutz aus der unteren Endstellung über Zwischenpositionen um die Schwenkachse SA in die obere Endstellung. Bei dieser Schwenkbewegung wird das zweite Zugelement Z2 auf die zweite Seilscheibe SS2 aufgewickelt und die gegenüber dieser aufschwenkenden Bewegung rückstellende Kraft der Feder F1 nimmt kontinuierlich zu.

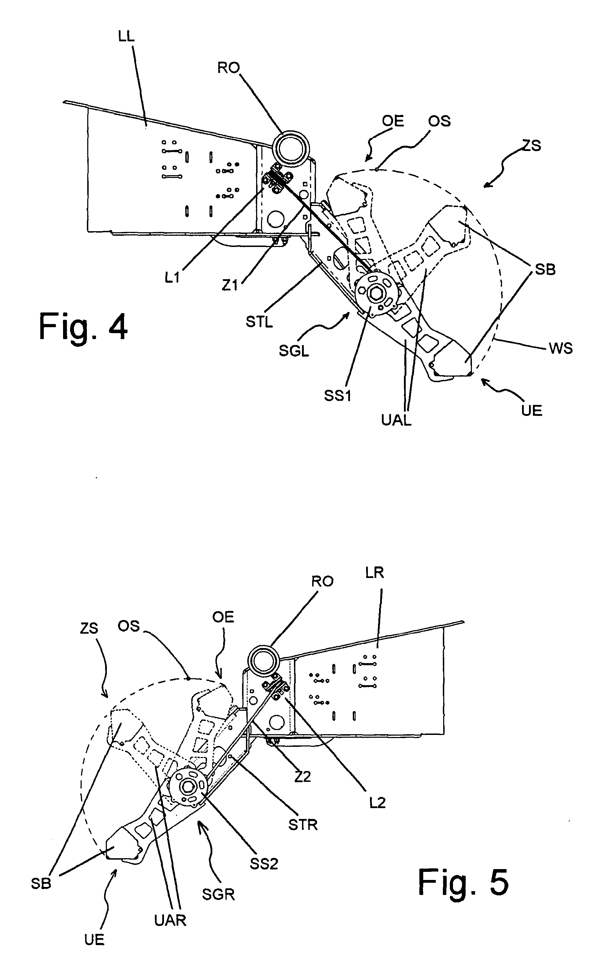

Die Aufschwenkbewegung ist in ihrer Abfolge von der unteren Endstellung UE des Unterfahrschutzes über eine Zwischenstellung ZS mit teilweise angehobenem Unterfahrschutz bis zu der oberen Endstellung OE des Unterfahrschutzes in Fig. 1 und Fig. 2 in Schrägansichten und in Fig. 4 als Seitenansicht von links auf den linksseitigen Schwenkarm UAL und in Fig. 5 als Seitenansicht von rechts auf den rechtsseitigen Schwenkarm UAR zu den jeweiligen Stellungen des Unterfahrschutzes dargestellt.

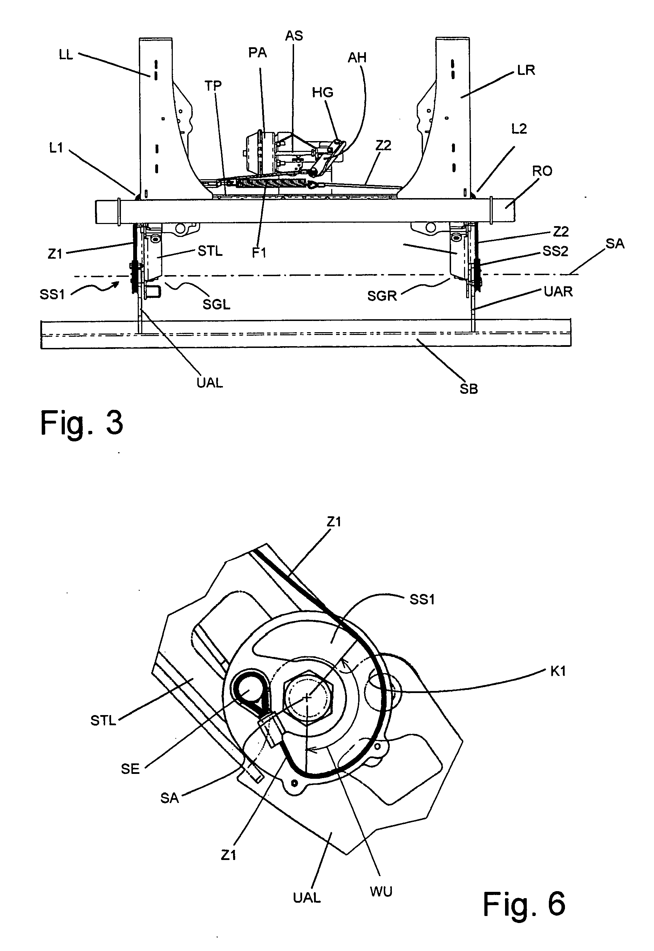

In der unteren Endstellung des Unterfahrschutzes nach Fig. 3 befinden sich der Aktuator PA und der von diesem verschwenkte Schwenkhebel AH in einer Ausgangsstellung, in welcher das erste Zugelement Z1 maximal in Richtung der Seilscheibe SS1 gezogen und mit maximaler Umschlingung der Schwenkachse SA auf die Kurvenbahn K1 der ersten Seilscheibe SS1 aufgewickelt ist. Die Schwenkarme UAL, UAR liegen an einem mechanischen Anschlag der Streben in unterer Stellung des Unterfahrschutzes an. Fig. 6 zeigt eine vergrößerte Ansicht auf das linksseitige Schwenkgelenk SGL für die untere Endstellung UE des Unterfahrschutzes, wobei eine axiale Abdeckung der Seilscheibe **SS1** weggelassen ist. Das Zugelement Z1 liegt über einen maximalen Umschlingungswinkel WU die Schwenkachse SA umschlingend an der Kurvenbahn K1 der ersten Seilscheibe SS1 an. Das Zugelement ist an einer Seileinhängung SE der ersten Seilscheibe gehalten.

Das zweite Zugelement Z2 ist maximal von der Kurvenbahn der zweiten Seilscheibe abgewickelt und umschlingt die Schwenkachse nicht oder nur minimal. Das zweite Zugelement Z2 ist durch die vorgespannte Feder F1 über die zweite Umlenkung L2 maximal in Richtung der Feder von der zweiten Seilscheibe SS2 weg gezogen.

Für die Aufschwenkung des Unterfahrschutzes aus der unteren Endstellung UE wird der Aktuator PA mit Druckluft beaufschlagt und drückt über die Stempelstange AS auf den Schwenkhebel AH, welcher dadurch von dem Aktuator weg gedrückt wird und eine Betätigungskraft auf das erste Zugelement Z1 überträgt. Diese Betätigungskraft bewirkt ein Drehmoment auf die erste Seilscheibe SS1 1 und den drehfest mit dieser gekoppelten Schwenkarm UAL und verschwenkt, in der Ansicht nach Fig. 6 und Fig. 4 entgegen dem Uhrzeigersinn, unter Überwindung der Gewichtskraft und des von der vorgespannten Feder über das zweite Zugelement Z2 auf den Unterfahrschutz ausgeübten Drehmoments den Unterfahrschutz um die Schwenkachse SA aus der unteren Endstellung UE in Pfeilrichtung in die Zwischenstellung ZS und weiter in die obere Endstellung OE. Bei der Verschwenkung wird das erste Zugelement Z1 zunehmend von der Kurvenbahn der ersten Seilscheibe SS1 abgewickelt und gleichzeitig wird das zweite Zugelement Z2 unter Dehnung der Feder F1 und somit unter zunehmender Federkraft auf die Kurvenbahn der zweiten Seilscheibe SS2 aufgewikkelt, bis in der skizzierten oberen Endstellung des Unterfahrschutzes das erste Zugelement Z1 nicht mehr oder nur mit minimaler Umschlingung der Schwenkachse SA auf der ersten Seilscheibe SS1 aufgewickelt ist und das Zugelement Z2 unter maximaler Umschlingung der Schwenkachse SA auf der Seilscheibe SS2 aufgewickelt ist. Unter minimaler Umschlingung oder maximaler Umschlingung seien dabei jeweils die minimal bzw. maximal im Rahmen der Schwenkbarkeit des Unterfahrschutzes auftretenden Umschlingungswinkel des jeweiligen Zugelements auf den zugeordneten Kurvenbahnen der Seilscheiben verstanden.

In der oberen Endstellung ist der Schwenkhebel AH durch den Aktuator PA maximal aus seiner in Fig. 3 skizzierten Ruhelage ausgeschwenkt, im skizzierten Beispiel zur rechten Fahrzeugseite hin, und zugleich ist die Zugfeder F1 maximal gespannt.

Der Schwerpunkt des Unterfahrschutzes durchläuft bei der Schwenkbewegung in Richtung der oberen Endstellung einen oberen Scheitelpunkt, welcher in Fig. 4 und Fig. 5 durch den Scheitelpunkt OS der Bewegung des Stoßbalkens SB repräsentiert sei. In der oberen Endstellung liegt der Schwerpunkt des Unterfahrschutzes damit in Fahrtrichtung vor der Schwenkachse SA und das Eigengewicht des verschwenkbaren Unterfahrschutzes wirkt auf diesen in die obere Endstellung drehend bzw. in der oberen Endstellung haltend. Für eine Rückschwenkung des Unterfahrschutzes aus der oberen Endstellung in Richtung der unteren Endstellung muss daher durch eine rückschwenkende Kraft eine Bewegung bis zum Scheitelpunkt oder über diesen hinaus veranlasst werden. Dies erfolgt durch die Kraft der zuvor bei der aufschwenkenden Bewegung in die Endstellung gespannten Feder F1, wenn die Beaufschlagung des Aktuators PA mit Druckluft abgebrochen und der Aktuator PA entlüftet wird. Das zweite Zugelement Z2 übt unter dem Einfluss der gespannten Feder F1 ein rückschwenkendes Drehmoment auf den Schwenkarm UAR auf und über die starre Verbindung zu dem Schwenkarm UAL und das erste Zugelement Z1 wird der Schwenkhebel AH aus der maximal ausgelenkten Stellung entsprechend der oberen Endstellung OE zurückgezogen in Richtung der Ausgangsstellung entsprechend der unteren Endstellung UE unter Durchlaufen der Zwischenstellung ZS. Dabei wird die Luft (oder bei hydraulischer Betätigung ein anderes Fluid) aus dem Zylinder des Aktuators herausgedrückt. Durch Entlüftung des Aktuators über eine Drosselöffnung mit kleinem, vorzugsweise einstellbarem Querschnitt kann gezielt eine Bedämpfung der rückschwenkenden Bewegung aus der oberen Endstellung in die untere Endstellung des Unterfahrschutzes erreicht werden, so dass eine solche Bewegung nicht schlagartig, sondern gedämpft verläuft.

In nicht skizzierter anderer vorteilhafter Ausführungsform kann die Federanordbnung, insbeodnere die Feder F1 in ihrer Funktion für die Einleitung der abschwenkenden Bewegung und/oder für die den Unterfahrschutz in der unteren Endstellung UE haltende Vorspannkraft durch einen zweiten Aktuator, insbesondere einen zweiten pneumatischen Aktuator ersetzt sein. Ein solcher zweiter Aktuator kann vorteilhafterweise auch eine Dämpfung oder Bremsung der aufschwenkenden Bewegung bewirken, indem er über eine Drosselöffnung entlüftet wird. Der zweite Aktuator kann auch ausschließlich für die abschwenkende Bewegung und/oder die Haltekraft in der unteren Endstellung wirkend eingesetzt sein, ohne eine Bremskraft oder Rückstellkraft in der aufschwenkenden Bewegung zu bewirken.

Der Schwenkbereich des Unterfahrschutzes liegt im skizzierten Beispiel vorteilhafterweise bei mehr als 120°, insbesondere ca. 150°. Die Zugelemente sind vorzugsweise immer mit einer Mindestumschlingung auf Kurvenbahnen der Seilscheiben SS1 1 bzw. SS2 anliegend.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere können auch beide Zugelemente auf derselben Seite des Unterfahrschutzes, d. h. in demselben Schwenkgelenk angebunden sein. Es kann dabei auch vorgesehen sein, dass das erste und das zweite Zugelement auf eine gemeinsame Seilscheibe in umgekehrtem Sinne auf- bzw. abwickelbar sind und/oder dass das erste und das zweite Zugelement entgegen gesetzt von einer Einspannung an einer Seilscheibe liegende Abschnitte eines durchgehenden Zugelements sind. Sowohl für das aufschwenkend wirkende als auch für das abschwenkend wirkende Drehmoment können auch jeweils gemeinsam betätigte Zugelemente zu beiden Schwenkgelenken führen. Die den Schwenkgelenken abgewandten Enden können auch ohne die Umlenkung zur Fahrzeugmittellängsachse hin mit einem Antrieb bzw. einer Federanordnung verbunden sein, beispielsweise auf eine Rolle oder Scheibe aufwickelbar sein. Die Seilscheiben können auch an den feststehenden Streben drehbar gehalten sein und über ein Getriebe, z. B. ein Zahngetriebe auf den oder die Schwenkarme wirken.

## Patentansprüche

1. Unterfahrschutzanordnung für ein Nutzfahrzeug mit einem schwenkbaren Unterfahrschutz, welcher zwei seitlich beabstandete Schwenkarme und einen im wesentlichen über die Fahrzeugbreite durchgehende Stoßbalken enthält, die über die Schwenkarme in einer Gelenkanordnung um eine horizontale Schwenkachse zwischen einer unteren Endstellung und einer oberen Endstellung über einen Schwenkwinkel verschwenkbar ist und aus der unteren Endstellung in die obere Endstellung unter der Einwirkung eines Aktuators aufschwenkbar ist, **dadurch gekennzeichnet, dass** zwischen den Aktuator und wenigstens einen ersten Schwenkarm ein erstes flexibles Zugelement eingefügt ist und das erste Zugelement eine von dem Aktuator aufgebrachte Betätigungskraft über aufschwenkend auf den wenigstens einen Schwenkarm überträgt.

2. Anordnung nach Anspruch 1, **dadurch gekennzeichnet, dass** das erste Zugelement in der unteren Endstellung des Schwenkarms die Schwenkachse von dieser radial beabstandet auf einer Kurvenbahn umschlingt.

3. Anordnung nach Anspruch 2, **dadurch gekennzeichnet, dass** die Kurvenbahn eine bezüglich der Schwenkachse unrunde Form besitzt.

4. Anordnung nach Anspruch 2 oder 3, **dadurch gekennzeichnet, dass** der Umschlingungswinkel WU wenigstens WU=WS-60°, insbesondere wenigstens WU=WS-30°, vorzugsweise wenigstens WU=WS beträgt mit WS als Schwenkwinkel des Schwenkarms zwischen der unteren Endstellung und der oberen Endstellung.

5. Anordnung nach einem der Ansprüche 1 bis 4, **dadurch gekennzeichnet, dass** der Schwenkwinkel zwischen der oberen Endstellung und der unteren Endstellung wenigstens 120°, insbesondere wenigstens 150° beträgt.

6. Anordnung nach einem der Ansprüche 1 bis 5, **dadurch gekennzeichnet, dass** der Schwerpunkt des schwenkbaren Unterfahrschutzes beim Verschwenken über den Schwenkwinkel einen oberen Scheitelpunkt durchläuft.

7. Anordnung nach einem der Ansprüche 1 bis 6, **dadurch gekennzeichnet, dass** die Verschwenkung in die Endstellung entgegen einer Rückstellkraft erfolgt.

8. Anordnung nach Anspruch 6 und 7, **dadurch gekennzeichnet, dass** die Rückstellkraft so bemessen ist, dass sie nach Wegfall der Betätigungskraft des Aktuators eine Rückschwenkung des Schwerpunkts in Richtung der unteren Endstellung über dem oberen Scheitelpunkt hinaus bewirkt.

9. Anordnung nach Anspruch 7 oder 8, **dadurch gekennzeichnet, dass** die Rückstellkraft durch eine beim Schwenken in die Endstellung gespannte erste Feder einer Federanordnung aufgebracht ist.

10. Anordnung nach einem der Ansprüche 1 bis 9, **dadurch gekennzeichnet, dass** die Rückstellkraft über ein weiteres Zugelement auf wenigstens einen Schwenkarm wirkt

11. Anordnung nach einem der Ansprüche 1 bis 10, **dadurch gekennzeichnet, dass** der schwenkbare Unterfahrschutz in der unteren Endstellung durch die Federanordnung mit einer Haltekraft in der unteren Endstellung gehalten ist.

12. Anordnung nach einem der Ansprüche 9 bis 11, **dadurch gekennzeichnet, dass** sowohl die Rückstellkraft und als auch die Haltekraft durch die erste Feder der Federanordnung aufgebracht sind.

13. Anordnung nach einem der Ansprüche 1 bis 12, **dadurch gekennzeichnet, dass** das Zugelement entlang einer das Schwenkgelenk tragenden Strebe in Richtung des Aktuators verläuft.

14. Anordnung nach Anspruch 13, **dadurch gekennzeichnet, dass** das Zugelement von dem Schwenkarm in Richtung des Aktuators beabstandeter Position in Richtung der Mittellängsebene des Fahrzeugs umgelenkt ist und der Aktuator in senkrecht zur Fahrtrichtung (x) liegender horizontaler Querrichtung (y) zwischen den beiden Schwenkarmen liegt.

15. Anordnung nach einem der Ansprüche 1 bis 14, **dadurch gekennzeichnet, dass** der Aktuator ein Pneumatikyzlinder ist.

16. Anordnung nach Anspruch 15, **dadurch gekennzeichnet, dass** der Pneumatikzylinder über eine Drosselöffnung entlüftet wird und über das erste Zugelement eine Bewegungsdämpfung der abschwenkenden Bewegung des Unterfahrschutzes bewirkt.

17. Anordnung nach einem der Ansprüche 1 bis 16, **dadurch gekennzeichnet, dass** ein zweiter Aktuator, insbesondere ein pneumatischer Aktuator vorgesehen ist, welcher zumindest einen Teil der abschwenkenden Bewegung des Unterfahrschutzes bewirkt oder unterstützt.
